# EUROPEAN PATENT SPECIFICATION

(11) **EP 1 311 619 B1**
(45) Date of publication and mention of the grant of the patent: **20.09.2006**
(21) Application number: 01954119.2
(22) Date of filing: 26.07.2001
(51) Int. Cl.: C08L 95/00, C08L 91/06

(54) **USE OF A BITUMEN/WAX COMPOSITION**
VERWENDUNG EINER BITUMEN/WACHS-MISCHUNG
UTILISATION D'UNE COMPOSITION DE BITUME/CIRE

(30) Priority: 25.08.2000 GB 0021072; 12.10.2000 GB 0024984
(43) Date of publication of application: 21.05.2003
(73) Proprietor: BP OIL INTERNATIONAL LIMITED, Sunbury-on-Thames, Middlesex TW16 7BP (GB)
(72) Inventor: Cowley, Lloyd Graham, Pontarddulais, Swansea SA4 1QF (GB); Fisher, Robert Gerald, Beckenham, Kent BR3 4LG (GB)
(74) Representative: Perkins, Nicholas David
(86) International application number: PCT/GB2001/003384
(87) International publication number: WO 2002/016499

(56) References cited:
- WO-A-99/11737
- US-A- 2 268 810
- US-A- 3 303 149

## Description

The present invention relates to a bitumen composition, in particular, one containing wax.

It is known to use bituminous compositions as pavings and coverings for a variety of surfaces, for example, roads and air fields. Such compositions comprise mixtures of aggregate and bitumen in specific proportions, and are generally laid and compacted while hot to provide a dense and durable surface.

For many applications, bitumen (known in the US as "asphalt") provides a sufficiently durable and adhesive binder for the aggregate. For high load applications, however, additives may be added to the bitumen in order to improve its mechanical properties. Various additives have been proposed for this purpose, including polymers such as ethylene and vinyl acetate co-polymers, random or block copolymers of styrene and conjugated dienes (eg SBS copolymers). More recently, synthetic waxes comprising blends of synthetic aliphatic hydrocarbons have also been used in bitumen blends (WO 99/11737). Such blends tend to be more resistant to deformation under high loads compared to their corresponding wax-free counterparts.

Fuels, such as diesel and gasoline have a damaging effect on bitumen. These fuels tend to dissolve or soften the bitumen component of bituminous surfaces. Thus, with prolonged use, the aggregate components of such surfaces tend to become less well bound, so the surface tends to disintegrate.

Surprisingly, we have now found that waxes can be used to improve the fuel resistance of bitumen.

Accordingly, the present invention provides the use of a wax as a hydrocarbon resistant, preferably lube oil or fuel resistant additive for a bitumen.

Suitable waxes include petroleum waxes and synthetic waxes, and in particular, ones having a softening point or melting point of above 50°C, preferably, from 60 to 150°C, and more preferably, from 60 to 120°C. Examples of petroleum wax include paraffin wax and microcrystalline wax. Such waxes are well known (see eg 3^{rd} Edition Kirk-Othmer, Encyclopaedia of Chemical Technology, Volume 24, page 473 - 476, which is incorporated herein by reference), and are generally obtained from crude oil and/or crude oil distillates by known techniques. Paraffin waxes are macrocrystalline products, which are usually solid at room temperature (25°C). Microcrystalline waxes also tend to be solids at room temperature. As well as being obtainable from petroleum distillates, however, these waxes can also occur naturally, for example, as ozokerite. Ozokerite wax may be refined and bleached to produce cerasin wax, which is also suitable for use as the fuel resistant additive.

Suitable synthetic waxes include hydrocarbon waxes, for example, polyethylene waxes, and preferably, Fischer Tropsch waxes. Waxes with functional groups, for example, chemically modified hydrocarbon waxes, and waxy esters and amides may also be employed. These synthetic waxes are well-known, and described in detail in the 3^{rd} Edition of Kirk-Othmer, Encyclopaedia of Chemical Technology, Volume 24, pages 477 to 479.

Polyethylene waxes particularly suitable for the use of the present invention, include those having molecular weights of less than 10,000, preferably, less than 5,000. Such waxes may be employed on their own, or as mixtures, for example, with one or more of the petroleum waxes mentioned above. Such polyethylene waxes may be manufactured by any conventional technique, for example, by high pressure or low pressure polymerisation, or controlled thermal degradation of high molecular weight polyethylene. In addition to homopolymers of ethylene, copolymers of ethylene, propylene, butadiene and acrylic acid may also be employed.

Fischer Tropsch waxes arc generally prepared by reacting carbon monoxide with hydrogen, typically, at high pressures over a metal catalyst to produce hydrocarbons. The waxes produced may comprise a blend of different compounds, including for example, polymethylene. Such waxes may have melting points between 65 and 105°C, for example, 68 to 105°C. Preferred Fischer Tropsch waxes are described in WO 99/11737. The waxes described in this document comprise more than 90 % n-paraffins. The remainder of the wax typically comprises iso-alkanes. The average carbon chain length of the wax may be 30 to 105, preferably, 60 to 100, more preferably, 60 to 90, for example, 80. Such waxes may be partially or fully oxidised. Oxidised waxes may be employed as fuel resistant additives on their own, or as mixtures with, for example, unoxidised Fischer Tropsch waxes. A preferred example of a Fischer Tropsch wax is that sold under the trade mark Sasobit® (Schumann Sassol). This wax melts at approximately 100°C.

Suitable chemically modified hydrocarbon waxes include chemically modified waxes of the microcrystalline, polyethylene and polymethylene classes. For example, such waxes may be oxidised in air in the presence or absence of a catalyst. Alternatively, such waxes may be reacted with a polycarboxylic acid, such as maleic acid, at, for example, high temperatures. Thus modified, the wax may be further modified, for example, through saponification and/or esterification.

Waxy amides may be produced by the amidation of fatty acids. Suitable fatty acids are those having 8 to 24, preferably, 12 to 22 carbon atoms. A preferred example is N,N'-distearoylethylenediamine. This compound has a melting point of approximately 140°C, an acid number of approximately 7, and a low melt viscosity

The waxes described above may be used to improve the fuel resistance of any bitumen. Suitable bitumens include naturally occurring bitumens, and manufactured bitumens and synthetic bitumens. Manufactured bitumens may be produced using a variety of known techniques, for example, by conventional or vacuum distillation of crude oil. Alternatively, the bitumen may be produced by solvent de-asphalting, or blowing air through, for example, vacuum residues. The latter method involves blowing air through, for example, a topped asphaltic crude or soft grade bitumen. This process may optionally be carried out in the presence of a catalyst, to produce a catalytically oxidised bitumen. Suitable catalysts include ferric oxide and phosphoric acids. Polymer modified bitumens may also be employed. Suitable polymers include ethylene and vinyl acetate co-polymers, random or block copolymers of styrene and conjugated dienes (e.g. SBS copolymers). Blends of different types of bitumens may also be suitable. The latter may be lightly coloured to facilitate pigmentation for decorative purposes.

The bitumens employed include those with penetrations in the range of 10 to 450 mm/10, as determined in accordance with EN 1426. The softening point of suitable bitumens may range from 30 to 110°C, preferably, 50 to 100°C, for example, 65 to 75° C, as determined in accordance with EN 1427. The penetration index of suitable bitumens may range between +9 and -1. The viscosity at 60°C may be 10 to 20,000 Pas.

The fuel resistant waxes described above may be added to bitumens in an amount of 0.1 to 20 wt %, preferably, 0.5 to 10 wt %, more preferably, 1 to 7.5 wt %, even more preferably, 2.5 to 6 wt %, for example, 4 to 5 wt % of the resulting wax/bitumen blend.

The wax may be blended with the bitumen using any suitable method. For instance, the wax may be added in divided form (eg as pellets, or as a powder), to the bitumen. The bitumen may be in the molten state, which is at a temperature sufficient to dissolve or disperse the wax. Suitable temperatures range between 120 and 200°C, preferably, 160 and 180°C. Alternatively, the wax may be blended with the bitumen, by
a forming an emulsion of wax and water,
b) forming an emulsion of bitumen and water, and
c) mixing the emulsions formed in steps a) and b).

The mixtures formed in step c) may then be mixed with aggregate, filler and/or sand. The resulting blend may then be applied to a road surface.

It is also possible to mix one or both of the emulsions formed in steps a) and b) with aggregate, filler and/or sand, prior to step c). The resulting blend may then be applied to a road surface.

It may be possible to add sufficient wax to the bitumen to produce a wax/bitumen blend of the desired final concentration. In certain applications, however, it may be desirable to produce a concentrated blend or "masterbatch" of the wax and bitumen, which may be mixed with wax-free bitumens or low wax bitumen blends to produce blends of the desired final composition. Suitably, the masterbatch may comprise the wax in a concentration of 10 to 30 wt %.

The wax/bitumen blends produced as described above may be employed as a binder for bituminous compositions with aggregates. The aggregates employed in such compositions include conventional aggregates such as granite. Optionally, fillers of, for example, limestone and cellulose may also be included in the bituminous composition. Sand and dust may also be present.

When the wax/bitumen blend is employed as a binder for a bituminous composition with aggregates, the wax/bitumen blend may form 1 to 20 wt %, preferably, 2 to 15 wt %, more preferably, 5 to 10 wt %, and most preferably, 6 to 8 wt % of the overall composition. The aggregate content of the overall composition may be more than 50 wt %, preferably, more than 60 wt %, even more preferably, more than 70 wt %, for example, 75 to 90 wt %. The remainder of the composition may comprise sand, cellulose and/or limestone.

When preparing the overall composition, it may be possible to add the wax to the bitumen, in the presence of the aggregates and/or fillers. It may also be possible to mix the wax with the bitumen prior to the addition of aggregate and/or filler. Bituminous compositions comprising the wax/bitumen blends described above may be used as pavings and coverings for a variety of surfaces, particularly, those surfaces which come into contact with fuel, for example, through spillage. Such surfaces include high-load surfaces such as lorry parks, motorway road surfacing, and air fields. The bituminous composition is also suitable for medium to low-load surfaces, where the traffic of heavy commercial vehicles is low. Examples of such applications include residential roads, service station forecourts, car parks, taxi-ways and driveways. According to a second aspect of the present invention there is provided a residential road, service station forecourt, driveway, car park or taxi way comprising a paving and/or coating comprising a bituminous composition comprising a blend of wax and bitumen.

Preferably, the wax is selected from one of the waxes described above.

The wax employed in the present invention may be used to impart fuel resistant properties against any hydrocarbon-containing fuel or lubricant. Examples of such fuels include motor fuels and aviation fuels, such as gasoline, diesel, av gas and jet fuel.

### Examples

### Example 1

A bituminous composition was prepared by mixing granite aggregate, a limestone filler, cellulose fibres and a binder, in the proportions below:

| **Constituent** | **% total mix** |
|---|---|
| 14mm aggregate (granite) | 44.0 |
| 10mm aggregate (granite) | 28.1 |
| Fine aggregate (granite) | 12.1 |
| Filler (limestone) | 9.4 |
| Fibres (cellulose) | 0.3 |
| Binder | 6.1 |

The binder used was a bitumen having a penetration of 40 mm/10, modified with 4wt % Sasobit® wax (FRB1)

This composition was then compacted into a cylindrical specimen (100mm (diameter) by 65mm (height)) using a "Gyropac" gyratory compactor Once compacted, the specimen was weighed and immersed in diesel at 20°C. The mass of the specimen was then determined at daily intervals, and the percentage weight loss calculated. The results are given in Table 1.

### Comparative Example A

Example 1 was repeated using a bitumen having a penetration of 55mm/10 as a binder. As can be seen from the results of Table 1, the weight loss observed with Example 1 is less than that observed with Comparative Example A.

**Table 1**

| | | | | | | | |
|---|---|---|---|---|---|---|---|
| | **Days in diesel at 20°C** | | | | | | |
| | **1** | **2** | **3** | **4** | **5** | **6** | **7** |
| | **Average % weight loss** | | | | | | |
| Comp. Ex. A | 2.0 | 3.8 | 5.0 | 6.4 | 7.3 | 8.1 | 8.8 |
| FRB1 | 0.5 | 1.0 | 1.8 | 2.8 | 3.3 | 3.7 | 4.2 |

### Example 2

A bituminous composition was prepared by mixing the following components together:

| **Constituent** | **Mix design % (w/w)** |
|---|---|
| 10mm aggregate (granite) | 62.3 |
| 6mm aggregate (granite) | 6.3 |
| Fine aggregate (granite) | 15.0 |
| Filler (limestone) | 9.6 |
| Fibres (cellulose) | 0.3 |
| Binder | 6.5 |

Three different binders were tested:
a) A bitumen having a penetration of 40 mm/10 modified with 4 wt % Sasobit® wax (FRB1);
b) An elastomeric bitumen modified with 4 wt % Sasobit® wax resulting in a bitumen composition having a penetration of 41mm/10 (FRB2);
c) A bitumen having a penetration of 55 mm/10 (50 pen).

The compositions were compacted into a cylindrical specimen (100 mm [diameter] x 65mm[height]) using a "Gyropac" gyratory compactor. The specimens were then weighed and immersed in diesel at 20 °C (+/- 0.5°C). The mass of the specimen was then determined at daily intervals, and the % weight loss calculated. The results are shown in the table below.

| **Days in Diesel at 20°C** | **% weight loss** | | |
|---|---|---|---|
| | **50 pen** | **FRB1** | **FRB2** |
| **1** | 1.5 | 0.3 | 0.0 |
| **2** | 2.6 | 0.4 | 0.1 |
| **3** | 3.2 | 0.6 | 0.2 |
| **4** | 3.7 | 0.8 | 0.2 |
| **5** | 4.6 | 1.2 | 0.3 |
| **6** | 5.6 | 1.4 | 0.3 |
| **7** | 6.2 | 1.6 | 0.4 |
| **8** | 8.5 | 1.9 | 0.5 |
| **9** | 9.4 | 2.0 | - |
| **10** | 10.1 | 2.3 | 0.6 |

### Example 3

A bituminous composition was prepared by mixing the following components together:

| **Constituent** | **Mix design % (w/w total mix)** |
|---|---|
| 14mm aggregate | 23.6 |
| 6mm aggregate | 22.0 |
| Sand / Dust blend | 27.4 |
| Coarse Sand | 18.3 |
| Limestone filler | 3.4 |
| Binders | 5.3 |

Four different binders were tested:
a) A bitumen having a penetration of 66 mm/10 modified with 4 wt % Sasobit® wax (FRB3;
b) An elastomeric bitumen modified with 4 wt % Sasobit® wax resulting in a bitumen composition having a penetration of 41mm/10 (FRB4);
c) A bitumen having a penetration of 55 mm/10 (50 pen).
d) A bitumen having a penetration of 103 mm/10 (100 pen).

The compositions were compacted into a cylindrical specimen (101 mm [diameter] x 63.5mm[height]) using a Marshall Hammer compactor. The specimens were then weighed and immersed in jet fuel (ATK) at 20 °C (+/- 0.5°C). The mass of the specimen was then determined at daily intervals, and the % weight loss calculated. The results are shown in the table below.

| **Days in ATK at 20°C** | **Average % weight loss** | | | |
|---|---|---|---|---|
| | **100 pen** | **50 pen** | **FRB3** | **FRB4** |
| 1 | 6.9 | 6.4 | 0.2 | 0.0 |
| 2 | 10.7 | 9.6 | 0.7 | 0.2 |
| 3 | 15.0 | 12.6 | 1.4 | 0.3 |
| 4 | 17.6 | 15.2 | 1.8 | 0.4 |
| 5 | 21.2 | 18.1 | 2.5 | 0.8 |
| 6 | 26.1 | 23.7 | 3.6 | 1.2 |
| 7 | 32.3 | 28.8 | 4.6 | 1.5 |
| 8 | 38.0 | 33.4 | 5.6 | 1.8 |
| 9 | 45.6 | 39.4 | 6.5 | 1.8 |
| 10 | 50.2 | 43.5 | 7.9 | 2.2 |
| 11 | 54.9 | 49.1 | 8.8 | 2.8 |
| 12 | 59.6 | 53.9 | 9.8 | 3.1 |
| 13 | 64.8 | 59.3 | 10.8 | 3.4 |
| 14 | 67.6 | 62.5 | 11.2 | 3.8 |

## Claims

1. Use of a wax as a hydrocarbon resistant, preferably fuel resistant additive for a bitumen.

2. Use as claimed in claim 1, where in the wax is a petroleum or synthetic wax having a softening point of above 50°C.

3. Use as claimed in any preceding claim, wherein the wax is a synthetic polyethylene wax.

4. Use as claimed in claim 3, wherein the wax is a Fischer Tropsch wax.

5. Use as claimed in claim 4, wherein the wax is obtainable by reacting carbon monoxide with hydrogen at high pressures over a metal catalyst.

6. Use as claimed in any preceding claim, wherein the bitumen has a penetration in the range of 10 to 450 mm/10, as determined in accordance with EN 1426.

7. Use as claimed in any preceding claim, wherein the bitumen is a polymer modified bitumen.

8. Use as claimed in any preceding claim, wherein the wax is added to a bitumen in an amount of 0.1 to 20 wt % of the resulting wax/bitumen blend.

9. Use as claimed in any preceding claim, wherein the wax is added to a bitumen to form a binder, which is mixed with aggregate.

10. Use as claimed in claim 8, wherein the wax and bitumen are mixed in the presence of the aggregate, or wherein the wax is mixed with the bitumen prior to the addition of aggregate.

11. Use as claimed in any preceding claim, as a gasoline, diesel, avgas and/or jet fuel resistant additive.

## Patentansprüche

1. Verwendung eines Wachses als ein Kohlenwasserstoff-resistentes, vorzugsweise Kraftstoff-resistentes Additiv für ein Bitumen.

2. Verwendung nach Anspruch 1, wobei das Wachs ein Erdöl- oder synthetisches Wachs mit einer Erweichungstemperatur von über 50 °C ist.

3. Verwendung nach einem vorhergehenden Anspruch, wobei das Wachs ein synthetisches Polyethylenwachs ist.

4. Verwendung nach Anspruch 3, wobei das Wachs ein Fischer-Tropsch-Wachs ist

5. Verwendung nach Anspruch 4, wobei das Wachs durch die Umsetzung von Kohlenmonoxid mit Wasserstoff bei hohen Drücken über einem Metallkatalysator erhältlich ist.

6. Verwendung nach einem vorhergehenden Anspruch, wobei das Bitumen eine Penetration in dem Bereich von 10 bis 450 mm/10 aufweist, wie gemäß EN 1426 bestimmt.

7. Verwendung nach einem vorhergehenden Anspruch, wobei das Bitumen ein Polymermodifiziertes Bitumen ist.

8. Verwendung nach einem vorhergehenden Anspruch, wobei das Wachs zu einem Bitumen in einer Menge von 0,1 bis 20 Gew.-% der resultierenden Wachs/Bitumen-Mischung zugegeben wird.

9. Verwendung nach einem vorhergehenden Anspruch, wobei das Wachs zu einem Bitumen zugegeben wird, um ein Bindemittel zu bilden, das mit dem Zuschlagstoff gemischt wird.

10. Verwendung nach Anspruch 8, wobei das Wachs und das Bitumen in der Gegenwart des Zuschlagstoffes gemischt werden, oder wobei das Wachs mit dem Bitumen vor der Zugabe des Zuschlagstoffes gemischt wird.

11. Verwendung nach einem vorhergehenden Anspruch als ein Benzin-, Diesel-, Flugbenzin- und/oder Düsentreibstoff-resistentes Additiv.

## Revendications

1. Utilisation d'une cire comme résistant aux hydrocarbures, de préférence comme additif résistant aux carburants pour un bitume.

2. Utilisation selon la revendication 1, où, dans la cire, on trouve une cire de pétrole ou une cire synthétique ayant un point de ramollissement supérieur à 50°C.

3. Utilisation selon l'une quelconque des revendications précédentes, dans laquelle la cire est une cire de polyéthylène synthétique.

4. Utilisation selon la revendication 3, dans laquelle la cire est une cire Fischer Tropsch.

5. Utilisation selon la revendication 4, dans laquelle la cire peut être obtenue en faisant réagir du monoxyde de carbone avec de l'hydrogène à des pressions élevées sur un catalyseur de métal.

6. Utilisation selon l'une quelconque des revendications précédentes, dans laquelle le bitume a une pénétrabilité dans l'intervalle de 10 à 450 mm/10, comme cela est déterminé conformément à EN 1426.

7. Utilisation selon l'une quelconque des revendications précédentes, dans laquelle le bitume est un bitume modifié par un polymère.

8. Utilisation selon l'une quelconque des revendications précédentes, dans laquelle la cire est ajoutée à un bitume dans une quantité de 0,1 à 20 % en poids du mélange cire/bitume résultant.

9. Utilisation selon l'une quelconque des revendications précédentes, dans laquelle la cire est ajoutée à un bitume pour former un liant, qui est mélangé avec un agrégat.

10. Utilisation selon la revendication 8, dans laquelle la cire et le bitume sont mélangés en présence de l'agrégat, ou dans laquelle la cire est mélangée avec le bitume avant l'addition de l'agrégat.

11. Utilisation selon l'une quelconque des revendications précédentes, comme additif résistant à l'essence, au diesel, à l'essence aviation et/ou aux carburéacteurs.
